# EUROPÄISCHE PATENTSCHRIFT

(11) **EP 1 938 121 B1**
(45) Veröffentlichungstag und Bekanntmachung des Hinweises auf die Patenterteilung: **22.06.2011**
(21) Anmeldenummer: 06774752.7
(22) Anmeldetag: 25.08.2006
(51) Int. Cl.: G01S 1/00, G01S 5/14, H04L 12/56, H04W 24/00, H04W 52/02, H04W 64/00

(54) **VORRICHTUNG UND VERFAHREN ZUR POSITIONSINFORMATION**
DEVICE AND METHOD FOR POSITION INFORMATION
DISPOSITIF ET PROCEDE D'INFORMATIONS DE POSITION

(30) Priorität: 21.10.2005 AT 17222005
(43) Veröffentlichungstag der Anmeldung: 02.07.2008
(73) Patentinhaber: Kapsch BusinessCom AG, 1120 Wien (AT)
(72) Erfinder: OCHENBAUER, Roland, A-2630 Ternitz (AT)
(74) Vertreter: Weiser, Andreas
(86) Internationale Anmeldenummer: PCT/AT2006/000353
(87) Internationale Veröffentlichungsnummer: WO 2007/045002

(56) Entgegenhaltungen:
- WO-A-00/13034
- US-A1- 2002 102 990
- US-B1- 6 559 794

## Beschreibung

Die vorliegende Erfindung betrifft eine Vorrichtung zur Positionsinformation, umfassend
eine satellitengestützte Positionsmeßeinrichtung mit einem energäezehrenden Meßmodus, in welchem sie die aktuelle Position der Vorrichtung an einem Ausgang bereitstellt, und einem energiesparenden Ruhemodus,
eine an den genannten Ausgang angeschlossene mobilfunknetzgestützte Kommunikationseinrichtung zum Senden der Position über ein zellulares Mobilfunknetz,
wobei die Kommunikationseinrichtung an einer Schnittstelle die lokale Empfangsfeldstärke und die lokale Zellkennung des Mobilfunknetzes bereitstellt.

Die Erfindung betrifft ferner ein Verfahren zur Positionsinformation mit Hilfe solcher Positionsmeß- und Kommunikationseinrichtungen.

Kombinierte Satellitennavigations- und Mobilfunkgeräte werden beispielsweise zur Nachverfolgung ("Tracking") von Frachtgütern oder im Flottenmanagement verwendet. Ein großes Problem stellt dabei der hohe Stromverbrauch der bekannten Vorrichtungen dar, weil gerade bei mobilen Frachtgütern wie Containern, Kühlgutbehältern usw. nicht immer eine Bordnetzversorgung zur Verfügung steht.

Es wurden daher bereits alternative Versorgungen über Solarzellen und Akkumulatoren vorgeschlagen. Gerade in der Logistikbranche ergeben sich jedoch oft lange Stillstandszeiten in der Dunkelheit, beispielsweise in einem Lagerhaus, auf einem unbeleuchteten Abstellgleis usw., was überaus große Akkumulatoren erfordern würde.

Aus der EP 1 132 713 ist eine Positionsinformationsvorrichtung der einleitend genannten Art bekannt, bei welcher die satellitengestützte Positionsmeßeinrichtung ein GPS-Empfänger ist, der in einen energiesparenden Ruhemodus ("Standby") versetzt werden kann. Die EP 1 132 713 schlägt vor, den GPS-Empfänger nur dann in den Meßmodus, zu versetzen, wenn z.B. eine Taste auf der Kommunikationseinrichtung (ein Mobiltelefon) gedrückt wird, eine bestimmte Nummer gewählt wird, ein Anruf im Mobiltelefon empfangen wird, sich das Mobiltelefon außerhalb seines Empfangsbereiches befindet oder ein Zeitgeber abläuft. Die ersten Varianten erfordern ein aktives Tätigwerden des Benutzers zum Einleiten der Positionsbestimmung, während die Variante mit dem Zeitgeber einen periodischen Stromverbrauch des GPS-Empfängers zur Folge hat.

Aus der US 2002/0102990 A1 sind eine Vorrichtung und ein Verfahren bekannt, bei welcher die Fositionsbestimmungsrate des GPS-Empfängers durch die Geschwindigkeit der Kommunikationseinrichtung bestimmt wird. Dies erfordert eine Geschwindigkeitsbestimmung im Mobilfunknetz, beispielsweise mittels Dopplereffektauswertung von Basisstationsfrequenzen des Mobilfunknetzes.

Aus der WO 00/13034 A1 ist es bekannt, die GPS-Positionsbestimmung eines Satellitentelephons zu unterlassen, wenn die Empfangsfeldstärke zum Kommunikationssatelliten unter einen vorgegebenen Schwellwert fällt.

Die Erfindung setzt sich zum Ziel, eine Vorrichtung und ein Verfahren zur Positionsinformation so weiterzuentwickeln, daß sie unter praktischen Einsatzbedingungen einen besonders geringen durchschnittlichen Energiebedarf haben. Dieses Ziel wird in einem ersten Aspekt der Erfindung mit einer Vorrichtung der genannten Art erreicht, die sich durch eine an den Ausgang der Positionsmeßeinrichtung und die Schnittstelle der Kommunikationseinrichtung angeschlossene Steuereinrichtung auszeichnet,
welche bei einer Empfangsfeldstärkenänderung, deren Betrag einen Schwellwert übersteigt, oder bei einer Änderung der Zellkennung die Positionsmeßeinrichtung in den Meßmodus schaltet und, wenn die Position über eine vorgegebene Zeitspanne gleichbleibt, die Positionsmeßeinrichtung in den Ruhemodus schaltet.

Die Erfindung beruht auf der Erkenntnis, daß die "grobe" Positionsinformation, welche aus einer Änderung der Empfangs-Die Erfindung beruht auf der Erkenntnis, daß die "grobe" Positionsinformation, welche aus einer Änderung der Empfangsfeldstärke oder der Zellkennung des zellularen Mobilfunknetzes gewonnen werden kann, dazu ausgenützt werden kann, um die satellitengestützte Positionsmeßeinrichtung für die "feine" Positionsbestimmung einzuschalten. Wenn sich die ermittelte Position eine Zeit lang nicht ändert, wird die Positionsmeßeinrichtung wieder in den stromsparenden Ruhemodus zurückversetzt. Dadurch kann im zeitlichen Durchschnitt eine entscheidende Senkung des Stromverbrauchs bzw. Energiebedarfs erreicht werden.

Eine bevorzugte Ausführungsform der Erfindung zeichnet sich dadurch aus, daß die Positionsmeßeinrichtung ein GPS-Empfänger und die Kommunikationseinrichtung ein GSM-Mobilfunkmodul ist, wodurch handelsübliche Komponenten eingesetzt werden können und eine breite Einsetzbarkeit gewährleistet ist.

Gemäß einer weiteren bevorzugten Ausführungsform der Erfindung ist der genannte Schwellwert 2 bis 10 dBm, besonders bevorzugt 3 bis 5 dBm. Weiters ist die genannte Zeitspanne bevorzugt 3 bis 15 min, besonders bevorzugt etwa 10 min. Diese Werte stellen einen praxistauglichen Kompromiß zwischen ausreichender Genauigkeit und minimalem durchschnittlichen Stromverbrauch dar.

Besonders günstig ist es, wenn der genannte Schwellwert seinerseits eine Funktion der lokalen Empfangsfeldstärke ist, wodurch eine weitgehend gleiche Positionsmeßgenauigkeit im gesamten Mobilkfunknetz erreicht werden kann.

In einen zweiten Aspekt schafft die Erfindung ein Verfahren zur Positionsinformation mittels einer satellitengestützten Positionsmeßeinrichtung mit einem energiezehrenden Meßmodus und seinem energiesparenden Ruhemodus sowie einer mobilfunknetzgestützten Kommunikationseinrichtung zum Senden der Position über ein zellulares Mobilfunknetz, das sich gemäß der Erfindung auszeichnet durch die folgenden Schritte in beliebiger Reihenfolge:
- Ermitteln der lokalen Empfangsfeldstärke oder der lokalen Zellkennung des Mobilfunknetzes mit Hilfe der Kommunikationseinrichtung und, wenn der Betrag der Empfangsfeldstärkenänderung einen vorgegebenen Schwellwert übersteigt oder sich die Zellkennung ändert, Umschalten der Positionsmeßeinrichtung in den Meßmodus;
- Ermitteln der aktuellen Position der Vorrichtung mit Hilfe der Positionsmeßeinrichtung und, wenn die Position über eine vorgegebene Zeitspanne gleichbleibt, Umschalten der Positionsmeßeinrichtung in den Ruhemodus.

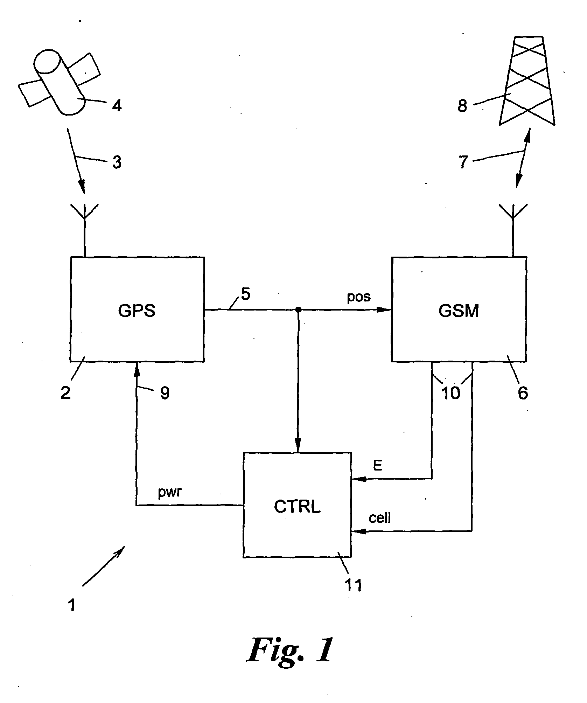

Weitere Merkmale und Vorteile der Erfindung ergeben sich aus der nachfolgenden Erfindung einer bevorzugten Ausführungsform in verbindung mit der beigeschlossenen Zeichnung, deren Fig. 1 die Vorrichtung der Erfindung in einem schematischen Blockschaltbild zeigt.

In Fig. 1 ist eine Vorrichtung 1 mit einem GPS-Empfänger 2 dargestellt, der Navigationssignale 3 von einem oder mehreren Satelliten 4 empfängt, daraus seine Position pos bestimmt und an einem Ausgang 5 bereitstellt. An den Ausgang 5 ist ein GSM-Mobilfunkmodul 6 angeschlossen, welches die ermittelte Position *pos* über ein zellulares Mobilfunknetz 7 an eine Zentrale 8 zur weiteren Auswertung sendet, beispielsweise die Zentrale eines Flottenmanagement- oder Frachtgut-Trackingsystems.

Anstelle des GPS-Empfängers 2 kann auch jede andere in der Technik bekannte satellitengestützte Positionsmeßeinrichtung verwendet werden, beispielsweise ein A-GPS, D-GPS-, GLONASS-, GALILEO-, EGNOS-, WAAS-Empfänger usw. In gleicher Weise kann anstelle eines GSM-Mobilfunkmoduls auch jede andere in der Technik bekannte mobilfunknetzgestützte Kommunikationseinrichtung eingesetzt werden, beispielsweise ein Mobiltelefon oder -modem nach dem TDM-, GPRS-, UMTS-Standard usw.

Der GPS-Empfänger 2 besitzt zwei verschiedene Betriebsarten, und zwar einen energieverzehrenden Meßmodus (Betriebsmodus), in welchem er die aktuelle Position pos ermittelt und am Ausgang 5 bereitstellt, und einen energiesparenden Ruhemodus ("Standby"), in welchem er z.B. die zuletzt ermittelte Position speichert oder einfach ganz ausgeschaltet ist. Über einen schematisch dargestellten Steuereingang 9 kann der GPS-Empfänger 2 zwischen seinem Meß- und seinem Ruhemodus umgeschaltet werden.

Handelsübliche GPS-Empfänger 2 besitzen z.B. im Meßmodus (Betriebsmodus) eine Stromaufnahme von ca. 200 mA, im Ruhemodus bzw. Standby eine Stromaufnahme von ca. 20 mA.

Auch das GSM-Mobilfunkmodul 6 besitzt verschiedene Betriebsarten, darunter einen energiezehrenden Sendemodus, in welchem es die ermittelte Position pos an die Zentrale 8 sendet, und einen energiesparenden Bereitschafts- oder Empfangsmodus. Das GSM-Mobilfunkmodul 6 weist eine Schnittstelle 10 auf, an der es in jeder Betriebsart zumindest die lokale Empfangsfeldstärke E und die Zellkennung cell des zellularen Mobilfunknetzes 7 bereitstellt.

Im Falle eines GMS-Netzes ist die lokale Empfangsfeldstärke E beispielsweise als Leistungspegel in der ETSI-Spezifikation GSM 05.05 definiert, und die Zellkennung cell ("cell-ID") in der ETSI-Spezifikation GSM 03.03.

Die Vorrichtung 1 umfaßt ferner eine an den Ausgang 5 des GPS-Empfängers 2 und die Schnittstelle 10 des GSM-Mobilfunkmoduls 6 angeschlossene Steuereinrichtung 11, welche aus der Position pos, der Empfangsfeldstärke E und der Zellkennung cell ein Steuersignal pwr für den Steuereingang 9 des GPS-Empfängers 2 erzeugt, und zwar in der folgenden Art und Weise:
1. GPS-Empfänger befindet sich im Ruhemodus:
   Wenn sich die Empfangsfeldstärke E mindestens um einen vorgegebenen Schwellenwert S ändert, d.h. |ΔE| > S, dann schaltet die Steuereinrichtung 11 den GPS-Empfänger 2 in den Meßmodus um.
2. GPS-Empfänger befindet sich im Meßmodus:
   Wenn die vom GPS-Empfänger 2 ermittelte Position pos über eine vorgegebene Zeitspanne T gleich bleibt (bzw. bei periodischer Ermittlung der Position pos mehrmals aufeinanderfolgend die gleiche Position ermittelt wird), dann schaltet die Steuereinrichtung 11 den GPS-Empfänger 2 wieder in den Ruhemodus zurück.

Der Schwellwert S wird im Hinblick auf eine Minimierung des durchschnittlichen Energiebedarfs der gesamten Vorrichtung 1 im gewählten Einsatzumfeld ermittelt; bevorzugt beträgt der Schwellwert S 2 bis 10 dBm, besonders bevorzugt 3 bis 5 dBm.

Das hier verwendete Maß für die Empfangsfeldstärke E ist der Leistungspegel (received power level) nach der ETSI-Spezifikation GSM 05.05 in dBm.

Die lokale Empfangsfeldstärke E ist vom Abstand der Vorrichtung 1 zur nächstgelegenen Basisstation des Mobilfunknetzes 7 abhängig. Beispielsweise beträgt bei einem Abstand von 250 m die Empfangsfeldstärke E -20 dBm, und eine Änderung ΔE von +/-5 dBm entspricht einer Abstandsänderung von ca. 150 m. In größerer Entfernung zur nächstgelegenen Basisstation entspricht derselben Abstandsänderung eine geringere Änderung ΔE um beispielsweise +/- 3 dBm, sodaß der Schwellwert S entsprechend zu reduzieren ist, wenn die Positionsänderung mit gleicher Genauigkeit bestimmt werden soll.

Es ist daher auch möglich, den Schwellwert S als Funktion der lokalen Empfangsfeldstärke E festzusetzen, um stets dieselbe Positionierungsgenauigkeit zu erreichen, d.h. S = f(E).

Auch die Zeitspanne T wird im Hinblick auf eine Minimierung des durchschnittlichen Energiebedarfs ermittelt; bevorzugt beträgt die Zeitspanne T 3 bis 15 min, besonders bevorzugt etwa 10 min.

Die Erfindung ist nicht auf die dargestellten Ausführungsformen beschränkt, sondern umfaßt alle Varianten und Modifikationen, die in den Rahmen der angeschlossenen Ansprüche fallen.

## Patentansprüche

1. Vorrichtung zur Positionsinformation, umfassend eine satellitengestützte Positionsmeßeinrichtung mit einem energiezehrenden Meßmodus, in welchem sie die aktuelle Position der Vorrichtung an einem Ausgang bereitstellt, und einem energiesparenden Ruhemodus,
eine an den genannten Ausgang angeschlossene mobilfunknetzgestützte Kommunikationseinrichtung zum Senden der Position über ein zellulares Mobilfunknetz,
wobei die Kommunikationseinrichtung an einer Schnittstelle die lokale Empfangsfeldstärke und die lokale Zellkennung des Mobilfunknetzes bereitstellt,
**gekennzeichnet durch** eine an den Ausgang (5) der Positionsmeßeinrichtung (2) und die Schnittstelle (10) der Kommunikationseinrichtung (6) angeschlossene Steuereinrichtung (11),
welche bei einer Empfangsfeldstärkenänderung (ΔE), deren Betrag (|ΔE|) einen Schwellwert (5) übersteigt, oder bei einer Änderung der Zellkennung (cell) die Positionsmeßeinrichtung (2) in den Meßmodus schaltet und, wenn die Position (pos) über eine vorgegebene Zeitspanne (T) gleichbleibt, die Positionsmeßeinrichtung (2) in den Ruhemodus schaltet.

2. Vorrichtung nach Anspruch 1, **dadurch gekennzeichnet, daß** die Positionsmeßeinrichtung (2) ein GPS-Empfänger und die Kommunikationseinrichtung (6) ein GSM-Nobilfunkmodul ist.

3. Vorrichtung nach Anspruch 1 oder 2, **dadurch gekennzeichnet, daß** der genannte Schwellwert (S) 2 bis 10 dBm, bevorzugt 3 bis 5 dBm ist.

4. Vorrichtung nach Anspruch 3, **dadurch gekennzeichnet, daß** der Schwellwert (S) eine Funktion der lokalen Empfangsfeldstärke (E) ist.

5. Vorrichtung nach einem der Ansprüche 1 bis 4, **dadurch gekennzeichnet, daß** wie genannte Zeitspanne (T) 3 bis 15 min, bevorzugt etwa 10 min ist.

6. verfahren zur Positionsinformation mittels einer satellitengestützten Positionsmeßeinrichtung mit einem energiezehrenden Meßmodus und einem energiesparenden Ruhemodus sowie einer mobilfunknetzgestützten Kommunikationseinrichtung zum Senden der Position über ein zellulares Mobilfunknetz, **gekennzeichnet durch** die folgenden Schritten in beliebiger Reihenfolge:
- Vermitteln der lokalen Empfangsfeldstärke (E) oder der lokalen Zellkennung (cell) des Mobilfunknetzes mit Hilfe der Kommunikationseinrichtung und, wenn der Betrag (|ΔE|) der Empfangsfeldstärkenäztderung (ΔE) einen vorgegebenen Schwellwert (S) übersteigt oder sich die Zellkennung (cell) ändert, Umschalten der Positionsmeßeinrichtung (2) in den Meßmodus;
- Ermitteln der aktuellen Position (pos) der Vorrichtung mit Hilfe der Positionsmeßeinrichtung (2) und, wenn die Position (pos) über eine vorgegebene Zeitspanne (T) gleichbleibt, Umschalten der Positionsmeßeinrichtung (2) in den Ruhemodus.

7. Verfahren nach Anspruch 6, **dadurch gekennzeichnet, daß** als Positionsmeßeinrichtung (2) ein GPS-Empfänger und als Kommunikationseinrichtung (6) ein GSM-Mobilfunkmodul verwendet wird.

8. Verfahren nach Anspruch 6 oder 7, **dadurch gekennzeichnet, daß** der genannte Schwellwert (S) 2 bis 10 dBm, bevorzugt 3 bis 5 dBm ist.

9. Verfahren nach Anspruch 8, **dadurch gekennzeichnet, daß** der Schwellwert (S) eine Funktion der lokalen Empfangsfeldstärke (E) ist.

10. Verfahren nach einem der Ansprüche 6 bis 9, **dadurch gekennzeichnet, daß** die genannte Zeitspanne (T) 3 bis 15 min, bevorzugt etwa 10 min ist.

## Claims

1. Device for providing position information, comprising
a satellite-aided position measuring device with an energy-consuming measuring mode, in which it provides the current position of the device at an output, and an energy-saving resting mode,
a mobile network-aided communication device connected to said output for transmitting the position via a cellular mobile network,
wherein the communication device provides the local received field strength and the local cell identification of the mobile network at an interface,
**characterised by** a control device (11), which is connected to the output (5) of the position measuring device (2) and the interface (10) of the communication device (6),
which switches the position measuring device (2) into the measuring mode in the case of a change in received field strength (ΔE), the amount (|ΔE|) of which exceeds a threshold value (S), or in the case of a change in cell identification (cell), and which, when the position (pos) remains constant over a given time period (T), switches the position measuring device (2) into the resting mode.

2. Device according to claim 1, **characterised in that** position measuring device (2) is a GPS receiver and the communication device (6) is a GSM mobile radio module.

3. Device according to claim 1 or 2, **characterised in that** said threshold value (S) is 2 to 10 dBm, preferably 3 to 5 dBm.

4. Device according to claim 3, **characterised in that** the threshold value (S) is a function of the local received field strength (E).

5. Device according to one of claims 1 to 4, **characterised in that** said time period (T) is 3 to 15 min, preferably about 10 min.

6. Method for providing position information by means of a satellite-aided position measuring device with an energy-consuming measuring mode and an energy-saving resting mode, as well as a mobile network-aided communication device for transmitting the position via a cellular mobile network, **characterised by** the following steps in any desired sequence:
- determining the local received field strength (E) or the local cell identification (cell) of the mobile network by means of the communication device, and switching over the position measuring device (2) into the measuring mode when the amount (|ΔE|) of the change in the received field strength (ΔE) exceeds a given threshold value (S) or the cell identification (cell) changes;
- determining the current position (pos) of the device by means of the position measuring device (2) and switching over the position measuring device (2) into the resting mode when the position (pos) remains constant over a given time period (T).

7. Method according to claim 6, **characterised in that** a GPS receiver is used as position measuring device (2) and a GSM mobile radio module is used as communication device (6).

8. Method according to claim 6 or 7, **characterised in that** said threshold value (S) is 2 to 10 dBm, preferably 3 to 5 dBm.

9. Method according to claim 8, **characterised in that** the threshold value (S) is a function of the local received field strength (E).

10. Method according to one of claims 6 to 9, **characterised in that** the said time period (T) is 3 to 15 min, preferably about 10 min.

## Revendications

1. Dispositif de détermination d'informations de position, comprenant :
un équipement de mesure de position assisté par satellite avec un mode de mesure consommant de l'énergie, dans lequel il fournit la position actuelle du dispositif au niveau d'une sortie, et un mode veille économisant de l'énergie,
un équipement de communication assisté par un réseau de radiocommunication mobile, connecté à ladite sortie, pour envoyer la position par l'intermédiaire d'un réseau de radiocommunication mobile cellulaire,
dans lequel l'équipement de communication fournit au niveau d'une interface l'intensité de champ de réception locale et l'identification de cellule locale du réseau de radiocommunication mobile,
**caractérisé par** un équipement de commande (11) connecté à la sortie (5) de l'équipement de mesure de position (2) et à l'interface (10) de l'équipement de communication (6),
qui, en cas de changement de l'intensité de champ de réception (ΔE) dont la grandeur (|ΔE|) dépasse une valeur de seuil (S), ou en cas de changement de l'identification de cellule (cell), commute l'équipement de mesure de position (2) en mode de mesure, et lorsque la position (pos) reste inchangée pendant une période prédéterminée (T), commute l'équipement de mesure de position (2) en mode veille.

2. Dispositif selon la revendication 1, **caractérisé en ce que** l'équipement de mesure de position (2) est un récepteur GPS et l'équipement de communication (6) est un module de radiocommunication mobile GSM.

3. Dispositif selon la revendication 1 ou 2, **caractérisé en ce que** ladite valeur de seuil (S) est de 2 à 10 dBm, de préférence de 3 à 5 dBm.

4. Dispositif selon la revendication 3, **caractérisé en ce que** la valeur de seuil (S) est fonction de l'intensité de champ de réception locale (E).

5. Dispositif selon l'une quelconque des revendications 1 à 4, **caractérisé en ce que** ladite période (T) est de 3 à 15 min, de préférence d'environ de 10 min.

6. Procédé de détermination d'informations de position au moyen d'un équipement de mesure de position assisté par satellite, avec un mode de mesure consommant de l'énergie et un mode veille économisant de l'énergie, ainsi que d'un équipement de communication assisté par un réseau de radiocommunication mobile pour envoyer la position par l'intermédiaire d'un réseau de radiocommunication cellulaire, **caractérisé par** les étapes suivantes, dans un ordre quelconque, consistant à :
- déterminer l'intensité de champ de réception locale (E) ou l'identification de cellule locale (cell) du réseau de radiocommunication mobile à l'aide de l'équipement de communication, et lorsque la grandeur (|ΔE|) du changement d'intensité de champ de réception (ΔE) dépasse une valeur de seuil (S) prédéterminée ou l'identification de cellule (cell) change, commuter l'équipement de mesure de position (2) en mode de mesure ;
- déterminer la position actuelle (pos) du dispositif à l'aide de l'équipement de mesure de position (2), et si la position (pos) reste inchangée pendant une période prédéterminée (T), commuter l'équipement de mesure de position (2) en mode veille.

7. Procédé selon la revendication 6, **caractérisé en ce qu'**un récepteur GPS est utilisé comme équipement de mesure de position (2), et un module de radiocommunication mobile GSM est utilisé comme équipement de communication (6).

8. Procédé selon la revendication 6 ou 7, **caractérisé en ce que** ladite valeur de seuil (S) est de 2 à 10 dBm, de préférence de 3 à 5 dBm.

9. Procédé selon la revendication 8, **caractérisé en ce que** la valeur de seuil (S) est fonction de l'intensité de champ de réception locale (E).

10. Procédé selon l'une quelconque des revendications 6 à 9, **caractérisé en ce que** ladite période (T) est de 3 à 15 min, de préférence d'environ 10 min.
